# EUROPEAN PATENT APPLICATION

(11) **EP 3 119 057 A1**
(43) Date of publication of application: **18.01.2017**
(21) Application number: 16179710.5
(22) Date of filing: 15.07.2016
(51) Int. Cl.: H04L 29/06

(54) **PACKET CONVERSION DEVICE AND METHOD FOR ALLOWING TRANSPARENT PACKET-BASED MULTIPATH BUNDLING**

(30) Priority: 16.07.2015 EP 15177150
(71) Applicant: Deutsche Telekom AG, 53113 Bonn (DE)
(72) Inventor: Bogenfeld, Eckard, D-67316 Carlsberg (DE); Amend, Markus, D-63667 Nidda (DE)
(74) Representative: Vossius & Partner Patentanwälte Rechtsanwälte mbB

(57) **Abstract**

The present invention is directed towards an adapted conversion device implementation for transparent packet-based multipath bundling protocol to realize a hybrid access efficiently. In case computer clients do not comprise a multipath bundling device or do not have installed a multipath bundling protocol for reasons of availability, preference or implementation specific reasons they are not enabled to communicate using packet-based multipath bundling and are hence excluded from its advantages. Hence, a convert device implementation is suggested which enables packet-based multipath bundling with low technical effort. Accordingly the present invention is directed towards a device, a method, a bundling converter server, a telecommunication system and a computer-readable medium for allowing transparent packet-based multipath bundling in a communication network.

## Description

The present invention is directed towards an adapted packet conversion device implementation for a packet-based multipath bundling protocol (MBP) to realize a hybrid access (HA) efficiently. In case computer clients do not comprise a multipath bundling device or do not have installed a multipath bundling protocol for reasons of availability, preference or implementation specific reasons they are not enabled to communicate using such technology and are hence excluded from its advantages as described below. Hence, a packet converter implementation is suggested which enables packet-based multipath bundling with low technical effort. Accordingly the present invention is directed towards a device, a method, a packet converter, a proxy server, a telecommunication system and a computer-readable medium for allowing packet-based multipath bundling in a communication network. MBP does not imply in this context a specific protocol or algorithm; possible are any network protocols, e.g. TCP/IP.

Known methods involve TCP/IP communication, which is restricted (because of binding connection to a 2 tuple (layer2/3 OSI) or a 5 tuple (layer4 OSI)) to a single path per connection although multiple data communication paths often exist between peers. The simultaneous use of these multiple paths for a TCP/IP session improves resource usage within the communication network and improves the user experience through higher throughput and improved resilience to network failure.

An TCP/IP connection provides a bidirectional bitpipe between two communicating hosts. However, MBP enables the hosts to use different paths, i.e. subflows, with different IP addresses to exchange packets belonging to the MBP connection. However, to the network layer, each MBP sub flow is arranged like a regular TCP/IP flow whose fragments/packages/segments carry special bundling informations, at least a sequence identifier. MBP manages the creation, removal, and utilization of these sub flows to send data over the communication network.

However, the known MBPs might not be available on every computing client in the network for several reasons. Hence, the aforementioned advantages such as improved resource usage within the communication network, improvement of the user experience through higher throughput and improved resilience to network failure are not available for any entity in the network. The adaption of existing clients requires further efforts and may not be possible due to restrictions such as adverse right management and may furthermore be prone to errors. Moreover it would be inefficient to amend every computing node of a network.

It is therefore an object of the present invention to provide a method and a respectively arranged device and system, which overcome the aforementioned problems and allow an efficient arrangement and procedure to enable packet-based multipath bundling in a communication network. It is furthermore of advantage to provide a respectively arranged converter device along with a telecommunication system including such entities. It is also an object of the present invention to provide a computer-readable medium containing program instructions for causing a computer to perform according to the provided method for operating the suggested devices.

The object is achieved with the features of the claims.

Accordingly, the present invention refers to a packet conversion device for allowing packet-based multipath bundling in a communication network. The packet conversion device comprises a single path interface being arranged for data packet transmission over one network link and a multipath interface being arranged for data packet transmission over at least two network links. Furthermore a packet conversion module is provided being arranged to convert a data packet being received over one of the single path interface or the multipath interface to the respectively other interface for its further transmission.

Multipath bundling describes a technology enabling endpoints of a given network connection to use multiple paths in parallel to exchange data packets. Such techniques enable the exchange of segments using different source-destination address pairs, resulting in the capability of using multiple paths through the underlying, potentially heterogeneous, communication network, in a significant number of scenarios.

A packet conversion is accomplished as incoming data packets are transformed from the incoming data packet protocol towards the outgoing data packet protocol. The receiving unit - may it be the single path interface or the multipath interface - receives data packets, which are separated according to an aspect of the present invention into payload and overhead such as routing information. One option to provide such a packet conversion is to maintain the payload portion of the data and create a new connection link, rewriting routing information, add required bundling informations and forwards the payload data packet and omits at least a part of the routing information, which is no longer of use. Hence, payload data is separated from routing information of the incoming interface and coupled with routing information of the outgoing interface. A further option is to encapsulate the whole incoming data in a MBP tunnel, which is split by the MBP over several subflows/different paths, send them and decapsulate it on receiver side. The information is thereby restored in their original condition and can be delivered.

The suggested data packet conversion device can be arranged such that the incoming interface is a single path interface and the outgoing interface is the multipath interface. Hence, there is one incoming channel and several outgoing channels between which the packets are switched or converted. The device may also be arranged the other way round with one incoming multipath interface and one outgoing single path interface.

According to an aspect of the present invention the multipath interface is operated according to an MBP. This provides the advantage that already implemented protocols can be reused and the suggested device can be integrated into existing environments with low effort. As described above the respective protocol already provides advantages and can be integrated into the context of the present invention. Hence, a separate device is provided, which provides an interface being operated according to an MBP for several client machines.

Preferably, the single path interface is operated according to a regular network protocol. A regular network protocol can be any network protocol, e.g. TCP/IP, UDP, DCCP, SCTP, QUIC or the like. In particular, the person skilled in the art also knows different other OSI-layer 4 protocols which are suitable for the single path interface.

Preferably, the packet conversion module is configured to convert at least one data packet received over the single path interface to at least one data packet to be transmitted over the multipath interface by rewriting and/or introducing header information of the at least one data packet received over the single path interface. It is understood by the skilled person that the conversion of at least one data packet is bidirectional. In other words, preferably the conversion module is configured to convert at least one data packet received over the multipath interface to at least one data packet to be transmitted over the single path interface by rewriting and/or introducing header information of the at least one data packet received over the multipath interface.

Preferably, the packet conversion module is configured to convert the at least one data received over the single path interface to at least one data packet to be transmitted over the multipath interface by not changing the payload. As mentioned before, it is clear for the skilled person that the conversion of the at least one data packet is bidirectional. Therefore, preferably the packet conversion module is configured to convert the at least one data received over the multipath interface to at least one data packets to be transmitted over the single path interface by not changing the payload.

Preferably, the packet conversion module is configured to trigger the multipath bundling protocol by stripping the payload of at least one data packet received over the single path interface and transmitting the at least one data packet over multipath interface through a newly opened path of the network.

Preferably, the packet conversion module is configured to transmit at least one converted data packet to an endpoint via a tunnel, wherein the tunnel protocol is the same as the multipath bundling protocol. In other words, the tunnel itself is split over several paths by MBP. The converter device encapsulates non MBP traffic into the tunnel, which terminates at the receiver MBP endpoint. Thereby the routing problem is inherently solved. Incoming encapsulated tunnel traffic at the converter device is extracted and forwarded to the original destination.

According to a further aspect of the present invention the single path interface avoids packet-based multipath bundling. This provides the advantage that the present invention also enhances existing architectures and enables multipath transmission over a converter from end devices to further end devices which at least in part do not support multipath transmission themselves. Furthermore computing steps are taken away from the end devices themselves and are handled in a scalable converter device.

According to a further aspect of the present invention the packet conversion module is formed by a network protocol. This provides the advantage that the packet conversion module can be formed according to several options including the implementation of a respective protocol, a software module or hardware devices.

According to a further aspect of the present invention the packet conversion module is arranged to transmit data packets between at least one end device supporting multipath bundling and at least one further end device not supporting multipath bundling. This provides the advantage that conversion can also be established in an environment where a part of the communicating nodes does not provide packet-based multipath bundling. Hence, the advantages of the suggested subject matter can be made available throughout a heterogeneous network with nodes of different capabilities.

According to a further aspect of the present invention the packet conversion module is arranged to modify/add/delete at least one network protocol specific header. This provides the advantage that headers, header information, header bytes, routing information, packets, overhead data, data not contributing to the underlying payload can be selectively sorted out. Hence, it is possible to implement a new connection for outgoing data without carrying on incoming overhead data. A new socket or communication link can be established without data processing of a previous data connection. According to a further aspect of the present invention each of the network links are formed by at least one of a group of networks links, the group comprising: a wireless network link, a wired network link, a satellite network link, a mobile radio access link, an internet link and an aggregated network link. This provides the advantage that the underlying can be heterogeneous regarding a variety of supported network technologies including wireless or wired communication links. Hence, existing network links can combine a variety of end devices.

According to a further aspect of the present invention the packet conversion device forwards data packets from one interface to the other interface on byte level. This provides the advantage that further processes steps are left out and an efficient forwarding of data packets can be established.

According to a further aspect of the present invention the packet conversion device is arranged to perform data packet sequence number handling. This provides the advantage that incoming data packets can be separated in payload and overhead and the incoming data packets holding payload as numbered packets can be forwarded and reassembled at their destination address.

According to a further aspect of the present invention the communication network is a HA network. This provides the advantage that the bundling of at least two physical channels to one logical channel and summing up the bandwidths can be accomplished in the suggested context for enabling packet-based multipath bundling.

Preferably, the packet conversion module is configured to transmit at least one converted data packet to an endpoint via a tunnel, wherein the tunnel protocol is the same as the multipath bundling protocol. Preferably, the tunnel is split over several paths by the multipath bundling protocol.

Preferably, the packet conversion module is configured to transmit a plurality of data packets to an endpoint via a plurality of tunnels. In other words, the packet conversion module is configured to transmit a plurality of data packets to an endpoint via a plurality of paths, wherein each path is tunneled. Preferably, the packet conversion device, in particular the packet conversion module, comprises a scheduler unit configured to schedule a plurality of data packets to be transmitted over the multipath interface to the respective tunnel of the plurality of tunnels.

The object is also achieved with a method for operating a packet conversion device for allowing packet-based multipath bundling in a communication network. The method comprises the steps of operating a single path interface being arranged for data packet transmission over one network link as well as operating a multipath interface being arranged for data packet transmission over at least two network links and operating a packet conversion module being arranged to convert a data packet being received over one of the single path interface or the multipath interface to the respectively other interface for its further transmission. Hence, the suggested packet conversion module is arranged to convert a data packet being received over one of the single path interface or the multipath interface to the respectively other interface for its further transmission. This may imply, according to an aspect of the present invention, a possible symmetric arrangement of two involved packet conversion modules. It is therefore of advantage to couple one module being arranged with an incoming single-path interface and an outgoing multipath interface over a network with a further module being arranged to receive data packets over an incoming multipath interface and convert them to an outgoing single path interface. Hence, a communication system is set up comprising two packet conversion devices exchanging data packets by providing conversion functionality.

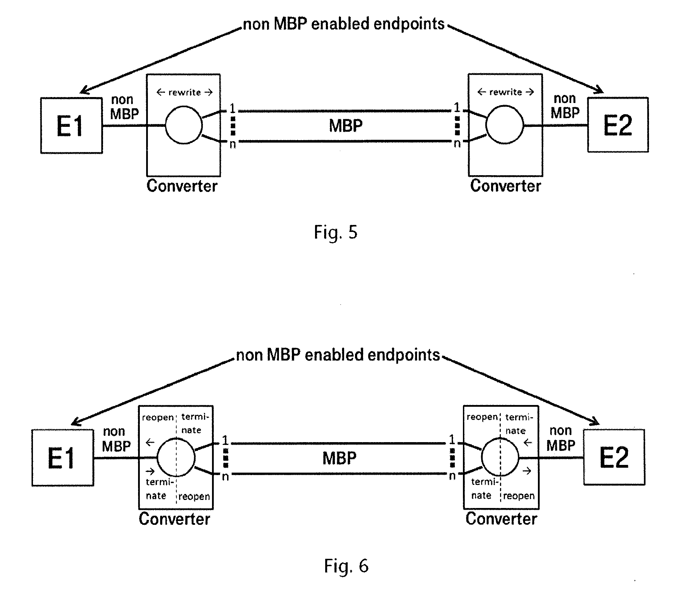

In case end devices are not able to support multipath communication they can communicate indirectly over two intermediate packet conversion devices. The intermediate packet conversion devices then communicate with the end devices in single path mode and directly communicate with each other in a multipath mode. Such a communication mode is in conformance with the scenario depicted in Figure 5. The end devices hence do not support multipath communication and are not required to be adapted to multipath technology. They may be left unchanged and communicate with the intermediate converter devices according to the devices' capabilities.

The packet conversion device or the packet conversion devices may be arranged as separate instances or may be as well integrated as a part of an already running proxy server. Hence, commonly known proxy servers or network devices can be enhanced towards the features of the present invention. It is also of advantage to reuse a existing single path interface and/ or an existing multipath interface and adapt them accordingly and couple them with a data packet conversion module as currently suggested.

The object is also achieved with a proxy server comprising a packet conversion device according to the aspects as set forth above.

The object is also achieved with a telecommunication system comprising at least one packet conversion device according to the aspects as set forth above.

The object is also achieved with a computer-readable medium containing program instructions for causing a computer to perform the method according to the aspects as set forth above.

In the following, the invention will be described merely by way of illustration with reference to the accompanying Figures, which show:
- Figure 1:: a reference topology for HA as an application scenario of an aspect of the present invention;
- Figure 2:: a general architecture for an MBP as an application scenario of an aspect of the present invention;
- Figure 3:: an architecture for non MBP enabled endpoints according to an aspect of the present invention;
- Figure 4:: an architecture for one MBP enabled endpoint according to an aspect of the present invention;
- Figure 5:: a direct converter device in an MBP architecture as shown in Fig.3 according to an aspect of the present invention;
- Figure 6:: a proxy converter device in an MBP architecture as of Fig.3 according to an aspect of the present invention;
- Figure 7:: an encapsulation converter device in an MBP architecture as shown in Fig.3 according to a further aspect of the present invention; and
- Figure 8:: an encapsulation converter device with scheduler logic in an MBP architecture as shown in Fig.3 according to a further aspect of the present invention.

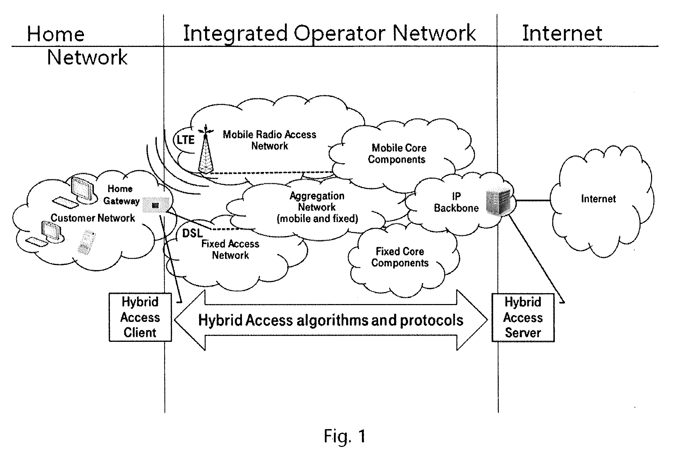

Figure 1 shows a reference topology for hybrid access, HA, in an underlying heterogeneous network as a possible application scenario of an aspect of the present invention. The heterogeneous network comprises different end devices, which are connected over a variety of communication links being joint together for forming a network. Hence, the network comprises mobile telephone links, for instance provided through LTE devices, along with fixed network links such as the commonly known internet with wired communication links. The present invention is furthermore directed towards any communicating end device, which does not only refer to the data consuming end user but also refers to intermediate network components being involved in data routing and transmission.

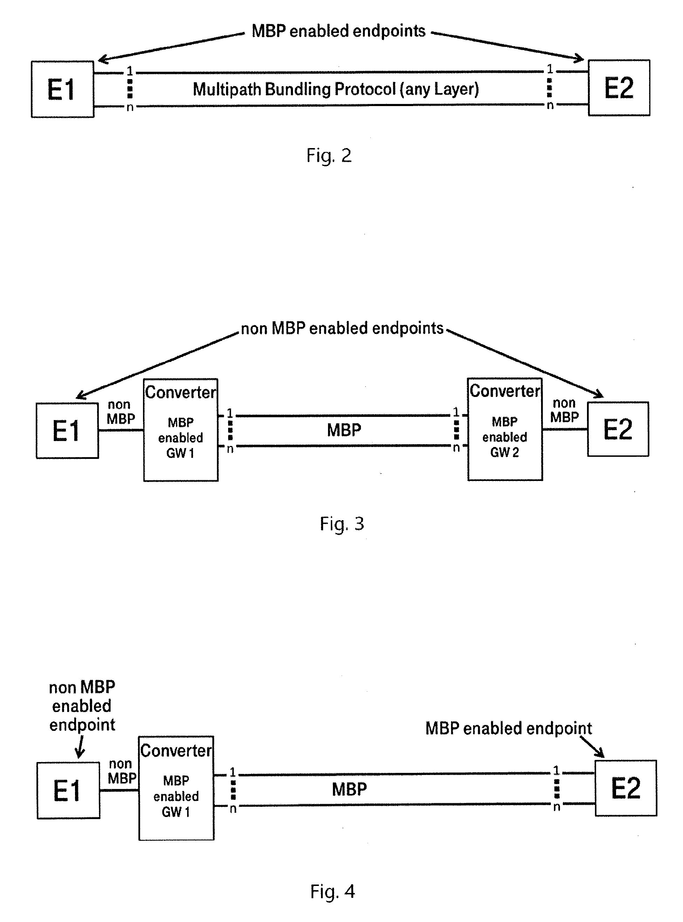

HA combines at least two different network links with the same or different network technology, for example it combines the access over the fixed network with the access over the cellular network. Figure 1 shows a typical scenario for HA but can also be implemented as an over the top (OTT) solution. The HA client has at least two access interfaces, one for example for Digital Subscriber Line (DSL) access and another one for example for access to the Long Term Evolution (LTE) network. The considerations on the HA algorithms are focused on a distributed client-server solution with client functionality in the residential gateway and server functionality (HA Server) in a data center at the network of the operator or in the public Internet. An available MBP protocol such as MPTCP can be applied for HA. MPTCP is a new proposed standard for a transport layer protocol as an extension to the regular TCP. MPTCP enhances network performance, especially if the available throughput on one interface is relatively lower than the application's demand and there is the possibility to use multiple (n) interfaces to maximize the overall output, see Figure 2.

Figure 2 shows a general architecture for an MBP, where two entities E1 and E2 communicate straight forward over the same protocol. So far no problems arise as both entities share communication capabilities over a common protocol. An incompatibility arises in a scenario where at least one of the communication partners does not support multipath communication. The main question that remains to answer at this point is what happens to clients that do not have installed such an MBP for reasons of availability, preference, or any other. That is, how could for example a regular TCP client, who is located behind an MPTCP enabled network, benefit from this aggregating capability. Another open question in the art addresses the bundling behavior, which has to be controlled for instance by a Software Defined Network (SDN) in terms of transport scheduling.

An advantageous solution is the deployment of a converter device to allow two end points to connect to each other using two MBP enabled gateways as depicted in Figure 3. Therefore, Figure 3 shows an architecture for non MBP enabled endpoints according to an aspect of the present invention.

Figure 4 shows the case that one of the endpoints is MBP capable. MBP does not imply a specific protocol or algorithm; possible protocols can be IP-GRE, ML-PPP, SCTP, MPTCP or other.

According to the state of the art, a challenge for the HA scenario is typically when packet-based MBP support is missing within user terminals and Internet servers. To connect them end-to-end and to allow controlled traffic distribution, a conversion function in between is necessary. Moreover, the conversion shall not have any adverse effect on throughput and latency. The invention can be applied to any packet-based transport layer protocol (layer 4) or packet-based network layer protocol (layer 3).

Figure 5 shows a preferred embodiment of a converter device according the present invention. One of the advantages of the converter device is its increased efficiency. The converter device directly converts non MBP traffic into MBP by rewriting and/or introducing header information. For example, the converter device directly converts non MBP traffic into MBP traffic by sequencing the header information. In this case, sequencing means that packets are consecutively numbered and at the receiver side assembled in the correct order. Alternatively, or in addition, the IP address can be manipulated - also known as addressing - and therefore it can be assured that the data flow is guided through the converter device. Preferably, the converter device leaves the payload additionally untouched. Depending on the functionality of the converter, the converter device keeps track of sessions and flows between one converter connected to one communicating entity E1 and another converter connected to another communicating entity E2.

As can be seen in said Figure 5, one of the major advantages of said converter is that there is no need to change the communicating entities E1 and E2. Rather, an adaption of already present middle boxes may be performed for implementing the subject-matter of the present invention. One challenge in this scenario is to transport the converted data to the receiver MBP endpoint. This can be done by attaching/editing routing information or set middle boxes accordingly. This applies in particular to a distributed or dynamic environment with several network segments in between where some communication in advance is necessary or helpful.

Figure 6 shows a converter device as shown in Fig. 5, further providing a solution for triggering the MBP. The converter device terminates incoming connections in a transparent way, as deputy of the original destination. The payload is stripped and put in a newly opened connection in direction to the destination. By doing so, the MBP is automatically triggered when available for the new connection. In particular, according to the embodiment as shown in Figure 6, the MBP between both converter devices are automatically triggered when available for the new connection. The routing challenge to redirect traffic through the converter device stays the same as described before.

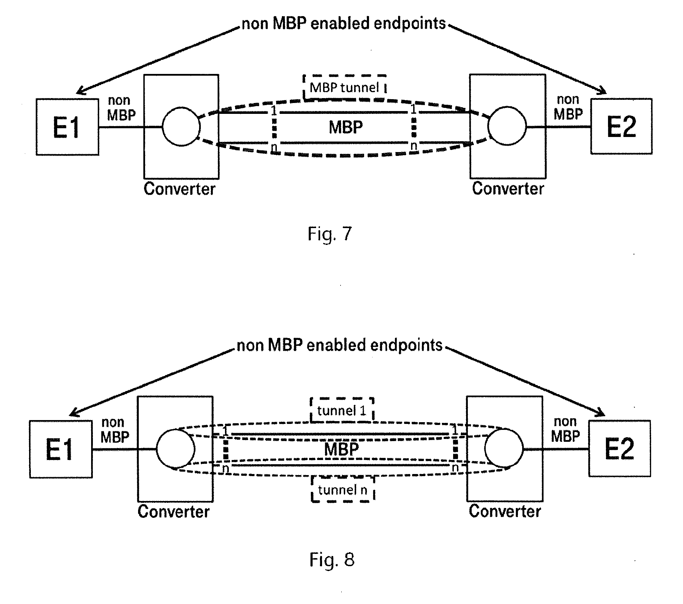

Figure 7 shows a converter device according to another embodiment of the present invention which can comprise the same features solving the same problems as the converter device shown in any of the preceding embodiments, particularly in the embodiments as shown in Figures 5 and 6. In addition, the converter device according as shown in Figure 7 solves the routing problem by using a tunnel solution between the MBP endpoints. The tunnel protocol is the same as the MBP protocol. In other words, the tunnel itself is split over several paths by MBP. The converter device encapsulates non MBP traffic into the tunnel, which terminates at the receiver MBP endpoint. Thereby the routing problem is inherently solved. Incoming encapsulated tunnel traffic at the converter device is extracted and forwarded to the original destination.

Figure 8 shows a converter device combining bundling logic and converter functionality. The converter is working like in Figure 7 and encapsulates non MBP traffic into a tunnel. However, in Figure 8, the packet conversion module transmits the data packets to an endpoint via a plurality of tunnels. Thus, the packet conversion module transmits a plurality of data packets to an endpoint via a plurality of tunnels whereas in Figure 7, one tunnel is spanned over the plurality of paths and the tunnel protocol is the same as the MBP protocol. In other words, the packet conversion module transmits a plurality of data packets to an endpoint via a plurality of paths, wherein each path is tunneled. According to this embodiment, packet conversion module comprises a scheduler unit which schedules a plurality of data packets to be transmitted over the multipath interface to the respective tunnel of the plurality of tunnels. Thus, which tunnel is used for transferring is decided by a built-in scheduler unit. The scheduler can be fed by tunnel connection information. One of the advantages of the converter device as shown in Figure 8 is that the converter device provides a highly optimized arrangement which can work as an OTT solution as well as an integrated one.

Hence, a conversion device implementation is suggested by the present invention, which enables packet-based multipath bundling with low technical effort. Accordingly the present invention is directed towards a device, a method, a bundling converter server, a telecommunication system and a computer-readable medium for allowing packet-based multipath bundling in a communication network, which enriches the known art.

The person skilled in the art appreciates that the aforementioned concepts are presented merely for illustrating the underlying idea of the suggested subject-matter. The implementations can as well rely on further legacy concepts and can be implemented without reference to the mentioned implementations. The described concepts are typically not bound to a specific hardware environment but are able to consider the underlying hardware constraints.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### Reference Signs List

- DSL: Digital Subscriber Line
- GW: Gateway
- HA: Hybrid Access
- HGW: Home Gateway
- IP: Internet Protocol
- LTE: Long Term Evolution
- MBP: Multipath Bundling Protocol
- MPTCP: Multipath TCP
- OSI: Open System Interconnection Model
- RTT: Round Trip Time
- SCTP: Stream Control Transmission Protocol
- SDN: Software Defined Network
- TCP: Transport Control Protocol

## Claims

1. A packet conversion device for allowing transparent packet-based multipath bundling in a communication network, comprising:
- a single path interface being arranged for data packet transmission over one network link;
- a multipath interface being arranged for data packet transmission over at least two network links; and
- a packet conversion module being arranged to convert a data packet being received over one of the single path interface or the multipath interface to the respectively other interface for its further transmission.

2. The packet conversion device according to claim 1, wherein the multipath interface is operated according to a multipath bundling protocol.

3. The packet conversion device according to claim 1 or 2, wherein the packet conversion module is configured to convert at least one data packet received over the single path interface to at least one data packet to be transmitted over the multipath interface by rewriting and/or introducing header information of the at least one data packet received over the single path interface.

4. The packet conversion device according to claim 3, wherein the packet conversion module is configured to convert the at least one data received over the single path interface to at least one data packet to be transmitted over the multipath interface by not changing the payload.

5. The packet conversion device according to any one of claims 2 to 4, wherein the packet conversion module is configured to trigger the multipath bundling protocol by stripping the payload of at least one data packet received over the single path interface and transmitting the at least one data packet over multipath interface through a newly opened path of the network.

6. The packet conversion device according to any one of claims 2 to 5, wherein the packet conversion module is configured to transmit at least one converted data packet to an endpoint via a tunnel, wherein the tunnel protocol is the same as the multipath bundling protocol.

7. The packet conversion device according to claim 6, wherein the tunnel is split over several paths by the multipath bundling protocol.

8. The packet conversion device according to any of claims 1 to 5, wherein the packet conversion module is configured to transmit a plurality of data packets to an endpoint via a plurality of tunnels.

9. The packet conversion device according to claim 8, wherein the packet conversion device comprises a scheduler unit configured to schedule a plurality of data packets to be transmitted over the multipath interface to the respective tunnel of the plurality of tunnels.

10. The packet conversion device according to any one of the preceding claims, wherein the single path interface avoids packet-based multipath bundling.

11. The packet conversion device according to any one of the preceding claims, wherein the packet conversion module is arranged to transmit data packets between at least one end device supporting multipath bundling and at least one further end device not supporting multipath bundling.

12. The packet conversion device according to any one of the preceding claims, wherein the packet conversion module is arranged to modify and/or add and/or delete at least one network protocol specific header.

13. The packet conversion device according to any one of the preceding claims, wherein each of the network links are formed by at least one of a group of networks links, the group comprising: a wireless network link, a wired network link, a satellite network link, a mobile radio access link, an internet link and an aggregated network link.

14. The packet conversion device according to any one of the preceding claims, wherein the packet conversion device forwards data packets from one interface to the other interface on byte level.

15. The packet conversion device according to any one of the preceding claims, wherein the packet conversion device is arranged to perform data packet sequence number handling.

16. A method for operating a packet conversion device for allowing transparent packet-based multipath bundling in a communication network, comprising:
- operating a single path interface being arranged for data packet transmission over one network link;
- operating a multipath interface being arranged for data packet transmission over at least two network links; and
- operating a packet conversion module being arranged to convert a data packet being received over one of the single path interface or the multipath interface to the respectively other interface for its further transmission.

17. A proxy server comprising a packet conversion device according to any one of claims 1 to 15.

18. A telecommunication system comprising at least one packet conversion device according to any one of claims 1 to 15.

19. A computer-readable medium containing program instructions for causing a computer to perform the method of claim 16.
